# EUROPÄISCHE PATENTANMELDUNG

(11) **EP 0 839 763 A2**
(43) Veröffentlichungstag der Anmeldung: **06.05.1998**
(21) Anmeldenummer: 97118179.7
(22) Anmeldetag: 20.10.1997
(51) Int. Cl.: C02F 3/06

(54) **Kleinkläranlage**

(30) Priorität: 02.11.1996 DE 19645268
(71) Anmelder: RHEBAU Rheinische Beton- und Bauindustrie GmbH & Co., 41541 Dormagen (DE)
(72) Erfinder: Dorgeloh, Elmar Dr.-Ing., 52064 Aachen (DE); Ehlers, Angela Dipl.-Ing., 52068 Aachen (DE); Gester, Thomas Dipl.-Ing., 41564 Kaarst (DE); Galle, Michael, 41836 Hückelhoven (DE)
(74) Vertreter: Döring, Wolfgang, Dr.-Ing. Patentanwälte Hauck, Graalfs, Wehnert, Döring, Siemons

(57) **Zusammenfassung**

Es wird eine Kläranlage, insbesondere Kleinkläranlage oder kleine Kläranlage, beschrieben, die mindestens eine von einer Wand umgrenzte Abwasserreinigungskammer aufweist, welche im Horizontalschnitt die Form eines Teil- oder Vollkreises besitzt. In der Abwasserreinigungskammer ist ein Festbett und darunter eine Belüftungseinrichtung angeordnet. Das Festbett weist zumindest eine Begrenzungsfläche auf, die im Horizontalschnitt einer Sehne des Teil- oder Vollkreises der Abwasserreinigungskammer entspricht. Der zwischen dieser Begrenzungsfläche und der Kammerumgrenzungswand gebildete Freiraum nimmt den abwärts gerichteten Teil einer Walzenströmung des Abwassers auf, deren aufwärts gerichteter Teil durch das Festbett verläuft. Auf diese Weise wird eine besonders intensive Kontaktierung des auf dem Festbett ausgebildeten biologischen Rasens erreicht.

## Beschreibung

Die vorliegende Erfindung betrifft eine Kläranlage, insbesondere Kleinkläranlage oder kleine Kläranlage, mit mindestens einer von einer Wand umgrenzten Abwasserreinigungskammer, die im Horizontalschnitt die Form eines Teil- oder Vollkreises besitzt, mit mindestens einem darin angeordneten Festbett und darunter angeordneter Belüftungseinrichtung, einer Abwasserzuführung in die Abwasserreinigungskammer und einer Abführung für das gereinigte Abwasser aus der Kammer.

Eine derartige Kläranlage ist beispielsweise aus der AT 000 107 U1 bekannt. Hierbei fließt Abwasser über den Rand einer die Abwasserreinigungskammer von einer Vorklärkammer trennenden Wand in die Abwasserreinigungskammer ein und tritt mit dem in der Kammer befindlichen Festbett in Kontakt. Das Festbett wird von unten über eine Belüftungseinrichtung mit Sauerstoff oder einem Sauerstoffträger angeströmt. Durch die Belüftungseinrichtung wird die Kammer in einem aeroben Milieu gehalten. Auf dem Festbett bildet sich ein sogenannter biologischer Rasen aus. Das auf diese Weise biologisch gereinigte Abwasser wird über eine in einer weiteren Begrenzungswand der Abwasserreinigungskammer vorgesehene Öffnung aus der Abwasserreinigungskammer herausgeführt.

Als Festbett können beispielsweise Schüttungen oder Pakete aus anorganischen oder organischen Materialien zur Anwendung gelangen. Das Schüttgut kann die Form von Kugeln, Prismen, Würfeln, Stäben o.dgl. besitzen. Bevorzugt finden entsprechende Kunststoffkörper Verwendung. Die nachfolgend beschriebene Erfindung ist in keiner Weise auf eine spezielle Art eines Festbettes beschränkt.

Der hier verwendete Begriff "Sauerstoffträger" bedeutet in erster Linie Luft. Dies schließt jedoch nicht aus, daß auch andere geeignete Sauerstoffträger zur Anwendung gelangen können. Dementsprechend ist der verwendete Begriff "Belüftungseinrichtung" so zu verstehen, daß damit Sauerstoff, Luft oder andere Sauerstoffträger als Luft in die Abwasserreinigungskammer eingeführt werden können.

Bei der vorstehend erwähnten bekannten Kläranlage füllt bei einer Ausführungsform das Festbett die Abwasserreinigungskammer in Breitenrichtung vollständig aus. Bei einer anderen Ausführungsform ist das Festbett in der Form eines Zylinders ausgebildet, der mittig innerhalb der Abwasserreinigungskammer angeordnet ist. Hierbei verbleibt zwischen dem Festbett und der Umgrenzungswand der Abwasserreinigungskammer ein nur mit Abwasser gefüllter Raum.

Der Erfindung liegt die Aufgabe zugrunde, eine Kläranlage der angegebenen Art zu schaffen, die eine besonders gleichmäßige Verteilung des Abwassers auf das Festbett und intensive Kontaktierung des Biofilms des Festbettes durch das Abwasser sicherstellt.

Diese Aufgabe wird erfindungsgemäß bei einer Kläranlage der angegebenen Art dadurch gelöst, daß das Festbett zumindest eine Begrenzungsfläche aufweist, die im Horizontalschnitt einer Sehne des Teil- oder Vollkreises entspricht, und daß der zwischen dieser Begrenzungsfläche und der Kammerumgrenzungswand gebildete Freiraum ein den abwärts gerichteten Teil einer Walzenströmung des Abwassers, deren aufwärts gerichteter Teil durch das Festbett verläuft, aufnehmender Raum ist.

Bei der erfindungsgemäßen Lösung wird somit in gezielter Weise ein begrenzter Freiraum zwischen dem Festbett und der Abwasserkammerumgrenzungswand vorgesehen, der den Aufbau einer Walzenströmung des Abwassers innerhalb der Abwasserreinigungskammer ermöglicht. Hierzu muß das Festbett so ausgebildet sein, daß es, verursacht durch die unterhalb des Festbettes angeordnete Belüftungseinrichtung, eine durch das Festbett nach oben gerichtete Strömung des Abwassers ermöglicht. Im oberen Bereich des Festbettes bzw. darüber erfolgt zwangsläufig eine Strömung des Abwassers in den Bereich des Freiraumes und von dort innerhalb des Freiraumes wieder nach unten unter das Festbett. Hierdurch wird das Abwasser gezielt umgewälzt, so daß eine besonders intensive Kontaktierung zwischen dem auf dem Festbett ausgebildeten biologischen Rasen und dem Abwasser stattfindet. Darüber hinaus wird das Abwasser entsprechend gleichmäßig über das gesamte Festbett verteilt, so daß sich keine Totzonen einstellen.

Zur Ausbildung des vorstehend beschriebenen Freiraumes nutzt die Erfindung geschickt den zwischen einer ebenen Begrenzungsfläche des Festbettes und der gekrümmten Umfassungswand der Abwasserreinigungskammer gebildeten Freiraum aus. Abgesehen hiervon füllt das Festbett vorzugsweise nahezu den gesamten Raum der Abwasserreinigungskammer aus, so daß sich die gewünschte Walzenströmung in einer vorgegebenen Richtung ausbilden kann. Einerseits wird somit eine gute Ausnutzung des in der Abwasserreinigungskammer zur Verfügung stehenden Raumes durch die Festbettanordnung erreicht, andererseits wird eine intensive Nutzung des Festbettes durch den entstehenden Umwälzeffekt erzielt.

In diesem Zusammenhang sei noch darauf hingewiesen, daß bei dem eingangs erwähnten Stand der Technik, bei dem das Festbett in der Form eines Zylinders in der Reinigungskammer angeordnet ist, in keiner Weise eine gewünschte Umwälzung des Abwassers erwähnt ist und aufgrund des dort verwendeten Schüttmateriales für das Festbett auch nicht möglich sein dürfte.

Bei der erfindungsgemäßen Lösung können je nach der Größe und Form der Abwasserreinigungskammer ein oder mehrere Festbetten in dieser angeordnet sein. Im einfachsten Fall ist innerhalb der Abwasserreinigungskammer ein einziges Festbett angeordnet, das eine entsprechende ebene Begrenzungsfläche aufweist, die zusammen mit einem entsprechenden Teil der Kammerumgrenzungswand den erwähnten Freiraum bildet. Es versteht sich, daß das Festbett auch mit mehreren derartigen ebenen Begrenzungsfläche versehen sein kann, so daß mehrere Freiräume gebildet werden, die mehrere Walzenströmungen erzeugen. Bei einer weiteren Ausführungsform ist die Abwasserreinigungskammer vorzugsweise in mehrere Sektoren unterteilt, denen jeweils ein Festbett mit einer einer Sehne entsprechenden Begrenzungsfläche zugeordnet ist. Diese Ausführungsform macht es möglich, ein Standardfestbett auszubilden, das je nach Größe und Form der Abwasserreinigungskammer, mehrfach in dieser Verwendung findet. So kann das Festbett beispielsweise im Horizontalschnitt etwa Dreiecksform aufweisen, und die Abwasserreinigungskammer im Horizontalschnitt einen oder mehrere viertelkreisförmige Sektoren besitzen, denen jeweils ein dreieckförmiges Festbett zugeordnet ist. Ist die Abwasserreinigungskammer halbkreisförmig ausgebildet, sind hierin zwei dreieckförmige Festbetten angeordnet, die zusammen ein großes Dreieck bilden. Besitzt die Abwasserreinigungskammer im Horizontalschnitt die Form eines Vollkreises, sind beispielsweise vier dreieckförmige Festbetten darin angeordnet, die zusammen die Form eienr Raute besitzen.

Natürlich kann die Abwasserreinigungskammer beispielsweise auch in drei Sektoren unterteilt sein, die jeweils ein entsprechend geformtes Festbett enthalten. Wesentlich ist, daß bei der Verwendung von standardmäßigen Festbetten immer ein oder mehrere Freiräume zwischen der Umfassungswand und den ebenen Begrenzungsflächen der Festbetten ausgebildet werden, während der übrige Raum der Kammer möglichst weitgehend mit dem Festbett bzw. den Festbetten gefüllt ist.

Durch die Schaffung des Freiraumes wird somit eine Walzenströmung erzielt, die alle Bereiche des Festbettes gleichmäßig mit Sauerstoff versorgt und das Abwasser besonders gleichmäßig über das Festbettmaterial verteilt, wobei die volle Festbettfläche ausgenutzt und der auf dem Festbett vorhandene biologische Rasen besonders intensiv kontaktiert wird.

Bei einer Ausführungsform der Erfindung erfolgt die Abwasserzuführung über die Oberkante der Umgrenzungswand. Mit "Umgrenzungswand" ist hiermit nicht nur die gekrümmte Außenwand, sondern auch eine bei Aufteilung der zylindrischen Kammer vorgesehene Zwischenwand gemeint. So erfolgt bei einer Ausführungsform, bei der die Kammer im Horizontalschnitt die Form eines Viertelkreises besitzt, die Abwasserzuführung über die Oberkante der die Abwasserreinigungskammer von einer Vorklärkammer abtrennenden Zwischenwand.

Bei einer weiteren Ausführungsform erfolgt die Abwasserzuführung über innerhalb der Umgrenzungswand vorgesehene Öffnungen bzw. Schlitze. Der Begriff "Umgrenzungswand" soll auch hier eine mögliche Zwischenwand einschließen.

Um bei den vorstehend beschriebenen beiden Arten der Abwasserzuführungen mit der erfindungsgemäßen Lösung einen besonders guten Effekt zu erzielen, ist hierbei der Freiraum in dem von der Abwasserzuführung entfernten Bereich der Abwasserreinigungskammer ausgebildet. Hierdurch wird die vorstehend beschriebene Walzenströmung begünstigt.

Eine besonders bevorzugte Ausführungsform der Erfindung sieht vor, daß die Abwasserzuführung über eine zwischen der Festbettunterseite und der Belüftungseinrichtung in die Abwasserreinigungskammer mündende Abgabeeinrichtung erfolgt. Diese Ausführungsform hat den Vorteil, daß das Abwasser unmittelbar in dem Bereich der Belüftungseinrichtung eingeführt und somit ohne längere Standzeiten in der Kammer sofort durch das Festbett umgewälzt wird. Bei dieser Art der Abwasserzuführung läßt sich die vorstehend beschriebene Walzenströmung in besonders günstiger Weise ausbilden.

Der erfindungsgemäß erzielte Effekt einer Walzenströmung, die sich gleichmäßig durch die gesamte Fläche des Festbettes erstreckt, läßt sich besonders gut realisieren, wenn die Unterseite des Festbettes möglichst gleichmäßig mit der Belüftungseinrichtung beaufschlagt wird bzw. wenn mehrere Belüftungseinheiten gleichmäßig über die Unterseite des Festbettes verteilt sind. Darüber hinaus sollte auch das Abwasser bei der Ausführungsform, bei der es über die Abgabeeinrichtung unterhalb des Festbettes eingeführt wird, gleichmäßig auf die einzelnen Belüftungseinheiten und damit die Unterseite des Festbettes verteilt werden. Hierzu umfaßt die Abgabeeinrichtung vorzugsweise einen Verteilerkopf, der das Abwasser zweckmäßigerweise sternförmig abgibt. Bei einer Ausführungsform der Erfindung gibt der Verteilerkopf auch Abwasser in Richtung auf den Freiraum ab. Dieses Abwasser gelangt nicht in den Bereich einer Belüftungseinheit, da eine solche innerhalb des Freiraumes nicht angeordnet ist, wird aber durch die dort vorhandene, nach unten und innen gerichtete Abwasserströmung mit nach oben gerissen und in das Festbett eingeführt. In diesem Fall wird daher das eingeführte Abwasser nicht durch die eingeblasene Luft, sondern durch die Abwasserwalze selbst mitgeführt.

Es versteht sich, daß bei einer zwischen der Festbettunterseite und der Belüftungseinrichtung vorgesehenen Abwasserzuführeinrichtung das Abwasser vorzugsweise nach unten abgegeben und gegen die Belüftungseinrichtung gerichtet wird.

Eine besondere Ausführungsform der Erfindung zeichnet sich dadurch aus, daß unter jedem dreieckförmigen Festbett drei Belüftungseinheiten angeordnet sind.

Wie eben eingangs erwähnt, kann das Festbett aus einer Vielzahl von Materialien, Körpern, Elementen etc. bestehen, die den Aufbau eines biologischen Rasens ermöglichen. Wichtig ist jedoch, daß ein derartiges Festbett zur Erzielung der gewünschten Walzenströmung eine Durchströmung von unten nach oben mit Abwasser unter Beaufschlagung der Belüftungseinrichtung ermöglicht. Um diese Wirkung zu verstärken, besitzt bei einer besonders bevorzugten Ausführungsform das Festbett vertikale Strömungskanäle, die den entsprechenden Walzenströmungseffekt ermöglichen. Dies kann über geeignete mit Kanälen durchzogene Kunststoffpackungen erreicht werden.

Die Erfindung wird nachfolgend anhand eines Ausführungsbeispieles in Verbindung mit der Zeichnung im einzelnen erläutert. Es zeigen:
- Figur 1: einen schematischen Vertikalschnitt durch eine Kleinkläranlage;
- Figur 2: eine schematische Unteransicht der Abwasserreinigungskammer der Kleinkläranlage der Figur 1, wobei allerdings die Belüftungseinrichtung schematisch über der Abwasserabgabeeinrichtung dargestellt ist;
- Figur 3: eine entsprechende Ansicht wie Figur 2 mit Darstellung der Abwasserfließrichtung;
- Figur 4: den in Figur 5 dargestellten Schnitt B mit Darstellung der Verteilung des Abwassers über den Biofilm;
- Figur 5: eine Unteransicht der Abwasserreinigungskammer ohne Belüftungseinrichtung und Abwasserabgabeeinrichtung zur Darstellung von Schnitt A und Schnitt B;
- Figur 6: den in Figur 5 gezeigten Schnitt A mit einer Dar stellung der Verteilung des Sauerstoffs über den Biofilm; und
- Figur 7: den in Figur 5 gezeigten Schnitt B mit einer Dar stellung der Verteilung des Sauerstoffs über den Biofilm.

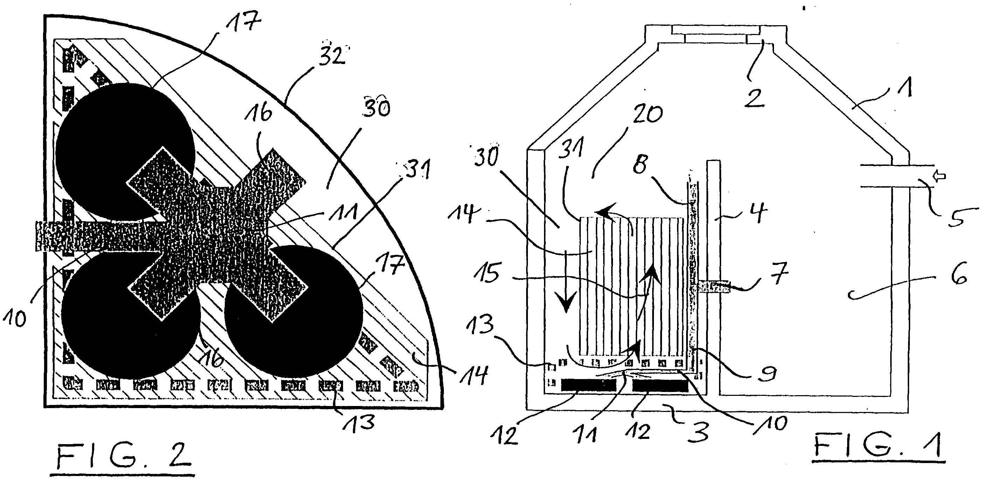

Die in Figur 1 im Vertikalschnitt dargestellte Kleinkläranlage ist im Querschnitt kreisförmig ausgebildet. Sie besteht aus einer Vorklärkammer 6, die die Hälfte des Kreises bildet, der eigentlichen Abwasserreinigungskammer 20, die einen Viertelkreis bildet, und einer Nachklärkammer (nicht gezeigt), die ebenfalls einen Viertelkreis bildet. Die Kläranlage besitzt ein etwa zylindrisches Gehäuse 1 mit einer Bodenwand 3 und einer konisch ausgebildeten Deckwand, die in eine horizontale Deckwand 2 übergeht, in der eine entsprechende Öffnung zum Begehen der Kläranlage vorgesehen ist. Zwischen der Vorklärkammer 6 und der Abwasserreinigungskammer 20 ist eine Wand 4 angeordnet.

In der eigentlichen Abwasserreinigungskammer 20 ist ein Festbett 14 angeordnet, das beispielsweise aus einer Vielzahl von Kunststoffkörperpaketen besteht. Das Festbett 14 ist auf einem Rost 13 gelagert. Im unteren Bereich der Kammer 20 befindet sich eine Belüftungseinrichtung 12, die aus insgesamt drei Tellerbelüftern 17 besteht (siehe Figur 2).

Das Abwasser gelangt in die Kleinkläranlage über eine geeignete Zuführöffnung 5 und von dort in die Vorklärkammer 6. Nach einer entsprechenden Vorklärung, die nicht Gegenstand der vorliegenden Erfindung ist, gelangt das vorgeklärte Abwasser über eine Abwasserzuführleitung 7 in die Abwasserreinigungskammer 20. Die Leitung 7 ist in bezug auf die Höhe der Zwischenwand 4 etwa mittig angeordnet und erstreckt sich durch diese. Sie mündet seitlich in die Kammer 20 ein und verzweigt sich in einen vertikal nach oben führenden Abschnitt 8, der zu Belüftungszwecken dient, und in einen vertikal nach unten führenden Abschnitt 9, der in einen horizontalen Endabschnitt 10 mündet. Am Ende des Abschnitts 10 ist ein Verteilerkopf 11 angeordnet, der deutlicher in Figur 2 gezeigt ist und in Verbindung mit Figur 2 nachfolgend beschrieben wird. Das Abwasser wird vom Verteilerkopf 11 nach unten gegen die Belüftungseinrichtung 12 abgegeben und von der von der Belüftungseinrichtung 12 abgegebenen Luft nach oben durch das Festbett 14 mitgeführt. Nach dem Durchströmen des Festbettes gelangt das Abwasser in den Außenbereich der Kammer und von dort entlang der Begrenzungswand wieder nach unten, so daß sich eine Walzenströmung ausbildet, wie mit den bei 15 dargestellten Pfeilen in Figur 1 gezeigt.

Figur 2 zeigt den horizontalen Abschnitt 10 der Abwasserzuführleitung, der in den Verteilerkopf 11 endet. Der Verteilerkopf 11 besitzt vier sternförmig angeordnete Abwasserabgabeöffnungen 16. Drei von diesen Abgabeöffnungen 16 sind jeweils einem Tellerbelüfter 17 zugeordnet, während die vierte Abgabeöffnung in einen Bereich außerhalb des Festbettes 14 mündet. Es ist darauf hinzuweisen, daß bei der Darstellung der Figur 2 die Belüftungseinrichtung (Tellerbelüfter 17) nicht unterhalb des Verteilerkopfes 11 dargestellt sind. Es wird jedoch deutlich aus Figur 2, daß die Tellerbelüfter über die einzelnen Abgabeöffnungen 16 direkt mit Abwasser angeströmt werden.

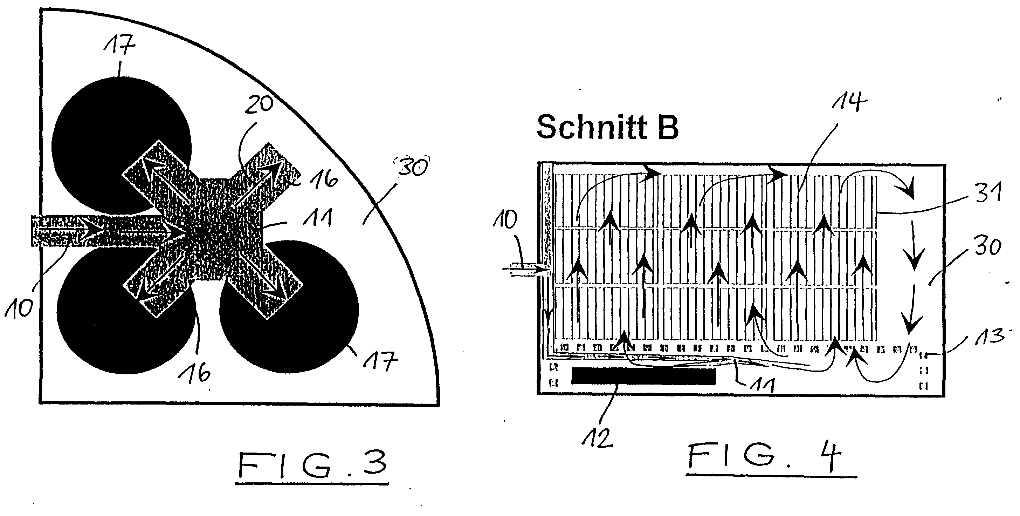

Figur 3 zeigt eine mit Figur 2 vergleichbare Darstellung, wobei die Fließrichtung des Abwassers durch entsprechende Pfeile 20 angedeutet ist.

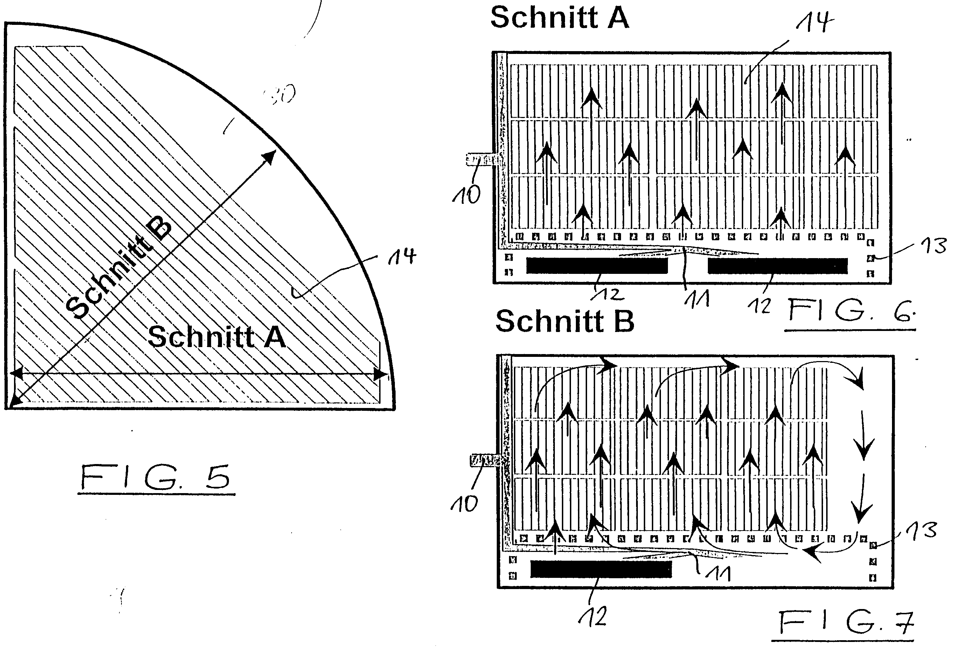

Figur 4 zeigt einen Schnitt durch die Kleinkläranlage in der in Figur 5 angedeuteten, mit Schnitt B bezeichneten Richtung. In Figur 4 ist die Verteilung des Abwassers über das Festbett 14, d.h. den Biofilm, gezeigt. Man erkennt, daß das vom Verteilerkopf 11 nach unten gegen die Belüftungseinrichtung 12 abgegebene Wasser durch die von der Belüftungseinrichtung 12 abgegebene Luft nach oben umgelenkt wird und das Festbett 14 durchströmt. Im oberen Endbereich des Festbettes erfolgt eine erneute Strömungsumlenkung in der Figur nach rechts und in den Freiraum neben dem Festbett wieder nach unten in den Bereich unterhalb des Festbettes. Es erfolgt dann eine erneute Aufströmung.

Das gereinigte Abwasser gelangt über eine Öffnung (nicht gezeigt), die in bezug auf die Höhe der Kammer 20 etwa mittig angeordnet ist, in die Nachklärkammer. In Betrieb ist das Festbett 14 immer im Abwasser eingetaucht.

Die Figuren 6 und 7, bei denen es sich um die in Figur 5 dargestellten Schnitte A und B handelt, zeigen die Verteilung des Sauerstoffs über das Festbett 14, d.h. den Biofilm. Figur 6 zeigt, daß die von der Belüftungseinrichtung 12 abgegebenen Luft bzw. der Sauerstoff das Festbett von unten nach oben etwa vertikal durchströmt. Schnitt B gemäß Figur 7 zeigt ebenfalls diese Vertikalströmung. Da hier jedoch zwischen Kammerwand und Festbettrand ein Freiraum besteht, erfolgt eine Umlenkung der Strömung des Sauerstoffs am Festbett vorbei wieder nach unten und vom unteren Bereich erneut durch das Festbett. Auf diese Weise wird die gewünschte Walzenströmung erzeugt.

Wie man den Figuren entnehmen kann, wird der vorstehend erwähnte Freiraum 30 durch den zwischen einer ebenen Begrenzungswand 31 des Festbettes 14 und der gekrümmten Umfassungswand 32 der Abwasserungsreinigungskammer vorhandenen Raum gebildet. Das Festbett 14 besitzt im Horizontalschnitt etwa Dreiecksform, wobei die Hypothenuse dieses Dreiecks der vorstehend erwähnten ebenen Begrenzungsfläche 31 entspricht. Genauer gesagt handelt es sich bei dem Festbett im Horizontalschnitt um ein Fünfeck, da zwei Vertikalkanten des Dreiecks durch zwei weitere Begrenzungsflächen ersetzt sind. Man erkennt, daß die ebene Begrenzungsfläche 31 im Horizontalschnitt einer Sehne des Viertelkreises entspricht, den die Abwasserreinigungskammer bildet.

Im übrigen Bereich der Kammer erstreckt sich das Festbett nahezu bis an die beiden Zwischenwände, die die Kammer von der Vorklär- und Nachklärkammer trennen, heran. Ein derartiges Festbettpaket ist standardmäßig ausgebildet und an eine solche Abwasserreinigungskammer in der Form eines Viertelkreises angepaßt. Wird die Abwasserreinigungskammer von zwei, drei oder vier Viertelkreisen gebildet, werden entsprechend zwei, drei oder vier standardmäßige Festbetten angeordnet, wobei jeweils ein Festbett einem Viertelkreis zugeordnet wird. Es werden dann mehrere Freiräume 30 gebildet, die jeweils den abwärts gerichteten Zweig einer gebildeten Walzenströmung aufnehmen.

Bei der hier dargestellten Ausführungsform weisen die Kunststoffkörperpakete des Festbettes 30 Strömungskanäle auf, die sich in Vertikalrichtung durch das Festbett erstrecken. Diese Kanäle können natürlich entsprechend geneigt, gekrümmt oder anders ausgebildet sein, um die Ausbildung des gewünschten biologischen Rasens zu begünstigen. Jedenfalls ermöglichen diese Kanäle eine gezielte Aufwärtsströmung des Abwassers durch das Festbett, so daß sich in Verbindung mit dem jeweiligen Freiraum 30 die gewünschte Walzenströmung einstellen kann.

Bei der hier gezeigten Ausführungsform gibt der Verteilerkopf 11 mit Hilfe einer Abwasserabgabeöffnung Abwasser direkt in den Bereich des Freiraumes 30 ab. Dieses Abwasser wird durch die ausgebildete Walzenströmung mit durch das Festbett nach oben geführt.

## Patentansprüche

1. Kläranlage insbesondere Kleinkläranlage oder kleine Kläranlage, mit mindestens einer von einer Wand umgrenzten Abwasserreinigungskammer, die im Horizontalschnitt die Form eines Teil- oder Vollkreises besitzt, mit mindestens einem darin angeordneten Festbett und darunter angeordneter Belüftungseinrichtung, einer Abwasserzuführung in die Abwasserreinigungskammer und einer Abführung für das gereinigte Abwasser aus der Kammer, dadurch gekennzeichnet, daß das Festbett (14) zumindest eine Begrenzungsfläche (31) aufweist, die im Horizontalschnitt einer Sehne des Teil- oder Vollkreises entspricht, und daß der zwischen dieser Begrenzungsfläche (31) und der Kammerumgrenzungswand (32) gebildete Freiraum (30) ein den abwärts gerichteten Teil einer Walzenströmung des Abwassers, deren aufwärts gerichteter Teil durch das Festbett (14) verläuft, aufnehmender Raum ist.

2. Kläranlage nach Anspruch 1, dadurch gekennzeichnet, daß die Abwasserreinigungskammer in mehrere Sektoren unterteilt ist, denen jeweils ein Festbett (14) mit einer einer Sehne entsprechenden Begrenzungsfläche (31) zugeordnet ist.

3. Kläranlage nach Anspruch 1 oder 2, dadurch gekennzeichnet, daß das Festbett (14) im Horizontalschnitt etwa Dreiecksform aufweist.

4. Kläranlage nach Anspruch 3, dadurch gekennzeichnet, daß die Abwasserreinigungskammer im Horizontalschnitt einen oder mehrere viertelkreisförmige Sektoren aufweist, denen jeweils ein dreieckförmiges Festbett (14) zugeordnet ist.

5. Kläranlage nach einem der vorangehenden Ansprüche, dadurch gekennzeichnet, daß die Abwasserzuführung über die Oberkante der Umgrenzungswand (Zwischenwand) erfolgt.

6. Kläranlage nach einem der Ansprüche 1 - 4, dadurch gekennzeichnet, daß die Abwasserzuführung über innerhalb der Umgrenzungswand (Zwischenwand) vorgesehene Öffnungen bzw. Schlitze erfolgt.

7. Kläranlage nach Anspruch 5 oder 6, dadurch gekennzeichnet, daß der Freiraum in dem von der Abwasserzuführung entfernten Bereich der Abwasserreinigungskammer ausgebildet ist.

8. Kläranlage nach einem der Ansprüche 1 - 4, dadurch gekennzeichnet, daß die Abwasserzuführung über eine zwischen der Festbettunterseite und der Belüftungseinrichtung in die Abwasserreinigungskammer mündende Abgabeeinrichtung erfolgt.

9. Kläranlage nach Anspruch 8, dadurch gekennzeichnet, daß die Abgabeeinrichtung einen Verteilerkopf (11) umfaßt.

10. Kläranlage nach Anspruch 9, dadurch gekennzeichnet, daß der Verteilerkopf (11) auch Abwasser in Richtung auf den Freiraum (14) abgibt.

11. Kläranlage nach Anspruch 3 oder 4, dadurch gekennzeichnet, daß unter jedem dreieckförmigen Festbett (14) drei Belüftungseinheiten (17) angeordnet sind.

12. Kläranlage nach einem der vorangehenden Ansprüche, dadurch gekennzeichnet, daß das Festbett (14) vertikale Strömungskanäle aufweist.
